# DEMANDE DE BREVET EUROPEEN

(11) **EP 4 095 531 A2**
(43) Date de publication de la demande: **30.11.2022**
(21) Numéro de dépôt: 22172831.4
(22) Date de dépôt: 11.05.2022
(51) Int. Cl.: G01P 13/02, G01D 5/14, G01M 9/06

(54) **DISPOSITIF DE MESURE DE L'ORIENTATION D'UN ÉCOULEMENT DE FLUIDE PAR RAPPORT A UNE SURFACE AÉRODYNAMIQUE, EN PARTICULIER D'UN AÉRONEF, AU MOYEN D'UN CAPTEUR MAGNÉTIQUE**

(30) Priorité: 27.05.2021 FR 2105530
(71) Demandeur: AIRBUS OPERATIONS (SAS), 31060 Toulouse (FR)
(72) Inventeur: VIALATTE, Jean-Luc, 31060 Toulouse (FR); VEERABADRAN, Karounen, 31060 Toulouse (FR); BOISSON, Thomas, 31060 Toulouse (FR); MALARD, Laurent, 31060 Toulouse (FR); GARCIA HALLO, Ivan, 31060 Toulouse (FR); MONTET, Florent, 31060 Toulouse (FR)
(74) Mandataire: Gevers & Orès

(57) **Abrégé**

- Dispositif de mesure de l'orientation d'un écoulement de fluide par rapport à une surface aérodynamique, en particulier d'un aéronef, au moyen d'un capteur magnétique.
- Le dispositif de mesure (1A) comporte un support (2A) destiné à être agencé sur une surface aérodynamique (SA), un élément profilé (3A) lié par l'une de ses extrémités au support (2A) et configuré pour être orientable sous l'effet d'un écoulement de fluide (E), un aimant (4A) solidaire de l'élément profilé (3A) et configuré pour générer un champ magnétique, et une unité de mesure (5A) configurée pour mesurer une valeur dudit champ magnétique et pour convertir cette valeur mesurée du champ magnétique en une valeur d'angle indiquant la direction de l'écoulement de fluide (E), le dispositif de mesure (1A) permettant ainsi de mesurer et de fournir, en temps réel, une valeur numérique d'angle qui permet de définir de façon très précise la direction de l'écoulement de fluide (E) par rapport à la surface aérodynamique (SA). Dans une première variante, un élément profilé en forme d'une ailette est pivotable autour d'un axe, et un aimant cylindrique effectuant une rotation autour l'axe de rotation de l'élément pivotable indique la direction d l'écoulement dans le plan tangent de la surface aérodynamique. Dans une deuxième variante, l'élément profilé est adapté pour être orientable dans l'espace, et le capteur est adapté pour convertir la valeur mesurée en une valeur d'angle dans l'espace. En particulier, l'élément profilé comprend un cône, un aimant agencé à l'intérieur du cône, et une unité de mesure réalisant des mesures à trois axes, qui peuvent indiquer l'angle d'écoulement dans des directions hors du plan tangent à la surface.

## Description

### DOMAINE TECHNIQUE

La présente invention concerne un dispositif de mesure de l'orientation d'un écoulement de fluide par rapport à une surface aérodynamique, notamment d'un engin mobile et en particulier d'un aéronef. Dans le cadre de la présente invention, on entend par « écoulement de fluide » l'écoulement d'un fluide gazeux, et notamment un écoulement d'air.

### ETAT DE LA TECHNIQUE

Dans le domaine de l'aéronautique, l'évolution toujours plus stricte des normes, mais également des attentes des clients, accroît les niveaux d'exigences notamment en termes de sécurité, de confort, de réduction du bruit et de consommation de carburant. Pour un aéronef, par exemple un avion de transport, ces critères dépendent beaucoup des performances aérodynamiques.

Les performances aérodynamiques d'un aéronef peuvent être améliorées significativement par une conception ingénieuse de sa structure et notamment de ses surfaces externes soumises à des écoulements d'air. Il est donc important de disposer d'une bonne connaissance de ces écoulements.

Une méthode usuelle pour analyser les écoulements de fluide, généralement d'air, à la surface d'un aéronef ou d'un équipement de l'aéronef ou bien d'une partie de l'aéronef, telle qu'une aile par exemple, consiste à fixer des fils (généralement en nylon ou en laine) sur la ou les surfaces considérées. L'aéronef réalise ensuite des essais, en vol ou en soufflerie, lors desquels des images des surfaces sont enregistrées, par exemple avec des caméras. Une observation visuelle du comportement des fils, soumis aux écoulements de fluide, permet de connaître la ou les directions des écoulements de fluide et d'identifier de potentiels phénomènes de décollement.

Néanmoins, cette méthode usuelle n'est pas complètement satisfaisante. En effet, les structures des aéronefs modernes sont de plus en plus élaborées avec des formes complexes pour lesquelles cette méthode est difficile voire impossible à mettre en place, en particulier en raison de problèmes de visibilité des zones correspondantes. Ces formes complexes constituent pourtant, généralement, des zones d'intérêt majeures pour l'analyse des écoulements de fluide.

De plus, les dispositifs de prise d'images à mettre en place pour enregistrer le comportement des fils pendant les essais sont lourds et coûteux, en particulier pour les vols tests qui nécessitent parfois qu'un ou plusieurs autres aéronefs suivent l'aéronef en test.

Par ailleurs, surtout, l'observation visuelle des fils ne fournit pas de mesures chiffrées et précises permettant de caractériser les écoulements de fluide ou les phénomènes de décollement. Il n'est donc pas possible, en particulier, de comparer des résultats d'essais à des résultats de simulations numériques. De plus, le niveau d'exigence de certaines certifications requiert une précision supérieure à celle d'une simple observation visuelle. En outre, cette méthode usuelle ne permet pas non plus d'analyser des résultats d'essais en temps réel.

### EXPOSÉ DE L'INVENTION

La présente invention a pour objet de remédier à ces inconvénients en proposant un dispositif de mesure de l'orientation d'un écoulement de fluide par rapport à une surface aérodynamique, en particulier d'un aéronef.

Selon l'invention, le dispositif de mesure comporte au moins :
- un support destiné à être agencé sur la surface aérodynamique ;
- un élément profilé lié par l'une de ses extrémités au support, et configuré pour être orienté, sous l'effet de l'écoulement de fluide, dans une direction correspondant à celle dudit écoulement de fluide ;
- un aimant solidaire de l'élément profilé et configuré pour générer un champ magnétique ; et
- au moins une unité de mesure configurée pour mesurer une valeur du champ magnétique généré par l'aimant, qui est fonction de la direction de l'écoulement de fluide.

De plus, dans un mode de réalisation préféré, l'unité de mesure est configurée pour convertir la valeur mesurée du champ magnétique généré par l'aimant en une valeur d'angle indiquant la direction de l'écoulement de fluide.

Ainsi, grâce à l'invention, on est en mesure de disposer d'une valeur numérique, à savoir ladite valeur d'angle qui est définie par rapport à un axe de référence comme précisé ci-dessous, qui indique de façon très précise la direction de l'écoulement de fluide par rapport à la surface aérodynamique, et ceci en temps réel.

Le dispositif de mesure permet ainsi de disposer de valeurs numériques pouvant être utilisées pour réaliser des traitements postérieurs, par exemple pour réaliser des comparaisons avec des mesures issues de simulations numériques.

Avantageusement, le dispositif de mesure comporte, de plus, une unité de traitement configurée pour réaliser un traitement au moins des valeurs d'angle transmises par l'unité de mesure. Dans un mode de réalisation particulier, l'unité de traitement est configurée pour déterminer, à partir de la valeur d'angle, un critère de comportement aérodynamique, parmi différents critères possibles.

Dans un premier mode de réalisation, l'élément profilé est configuré pour être orientable dans un plan et l'unité de mesure est configurée pour convertir la valeur mesurée du champ magnétique généré par l'aimant en une valeur d'angle dans ledit plan.

De plus, dans une réalisation particulière de ce premier mode de réalisation, l'élément profilé comprend une ailette pourvue d'un élément saillant configuré pour former une liaison pivot entre l'élément profilé et le support.

En outre, dans un second mode de réalisation, l'élément profilé est configuré pour être orientable dans l'espace et l'unité de mesure est configurée pour convertir la valeur mesurée du champ magnétique généré par l'aimant en une valeur d'angle dans l'espace.

De plus, dans une réalisation particulière de ce second mode de réalisation, l'élément profilé comprend un cône de révolution pourvu d'un sommet et ledit cône est fixé au support par l'intermédiaire d'un fil de liaison, une première extrémité du fil de liaison étant attachée au support et une seconde extrémité du fil de liaison étant attachée au sommet du cône.

Par ailleurs, dans un mode de réalisation particulier, l'unité de mesure comprend un capteur magnétique de type micro électromécanique (MEMS pour « Micro Electro Mecanical Sensor » en anglais).

Par ailleurs, de façon avantageuse, l'unité de mesure est configurée pour transmettre également la valeur mesurée du champ magnétique généré par l'aimant à l'unité de traitement, et l'unité de traitement est configurée pour comparer cette valeur mesurée du champ magnétique à une valeur limite prédéterminée, et pour générer une alerte si ladite valeur mesurée du champ magnétique est supérieure à cette valeur limite.

En outre, dans un mode de réalisation particulier, l'unité de mesure comporte au moins un capteur auxiliaire apte à mesurer au moins un paramètre auxiliaire autre que le champ magnétique, par exemple la température ou la pression.

### BRÈVE DESCRIPTION DES FIGURES

Les figures annexées feront bien comprendre comment l'invention peut être réalisée. Sur ces figures, des références identiques désignent des éléments semblables.
La figure 1 est une vue, en coupe de côté, d'un premier mode de réalisation d'un dispositif de mesure de l'orientation d'un écoulement de fluide.
La figure 2 est une vue éclatée, en perspective, d'un dispositif de mesure conforme à ce premier mode de réalisation.
La figure 3 est une vue schématique d'un second mode de réalisation d'un dispositif de mesure de l'orientation d'un écoulement de fluide.
La figure 4 est une vue schématique, en perspective, d'un aimant et d'une unité de mesure qui permettent d'illustrer la mesure du champ magnétique généré par l'aimant dans un plan.
La figure 5 est une vue schématique, en perspective, d'une unité de mesure qui permet d'illustrer la mesure du champ magnétique généré par un aimant dans l'espace.
La figure 6 est une vue schématique partielle, en perspective, d'un aéronef dont on a représenté une aile et un réacteur, sur lesquels sont installés des dispositifs de mesure.

### DESCRIPTION DÉTAILLÉE

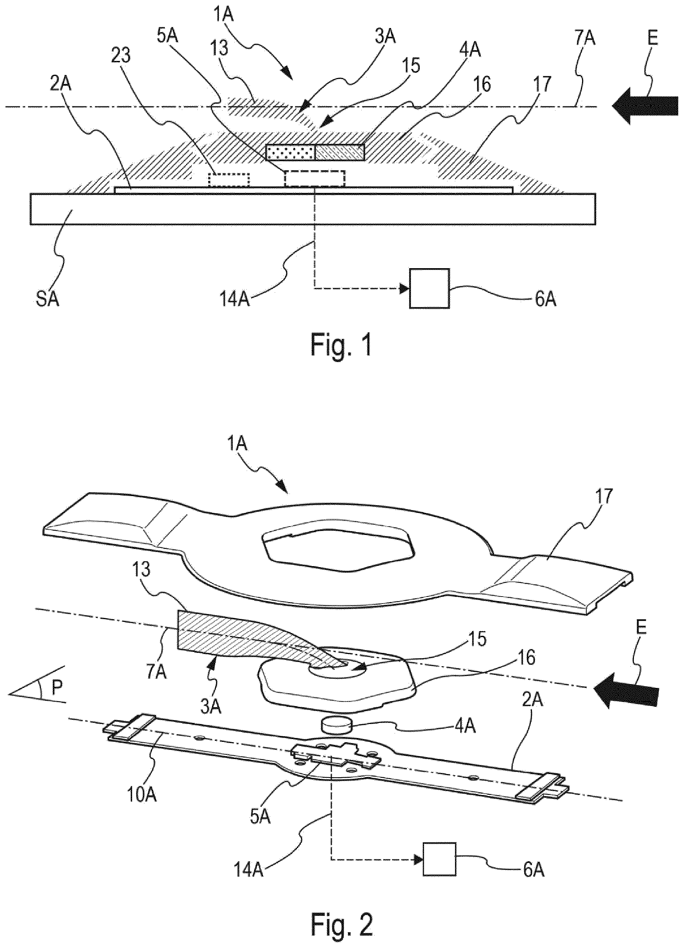

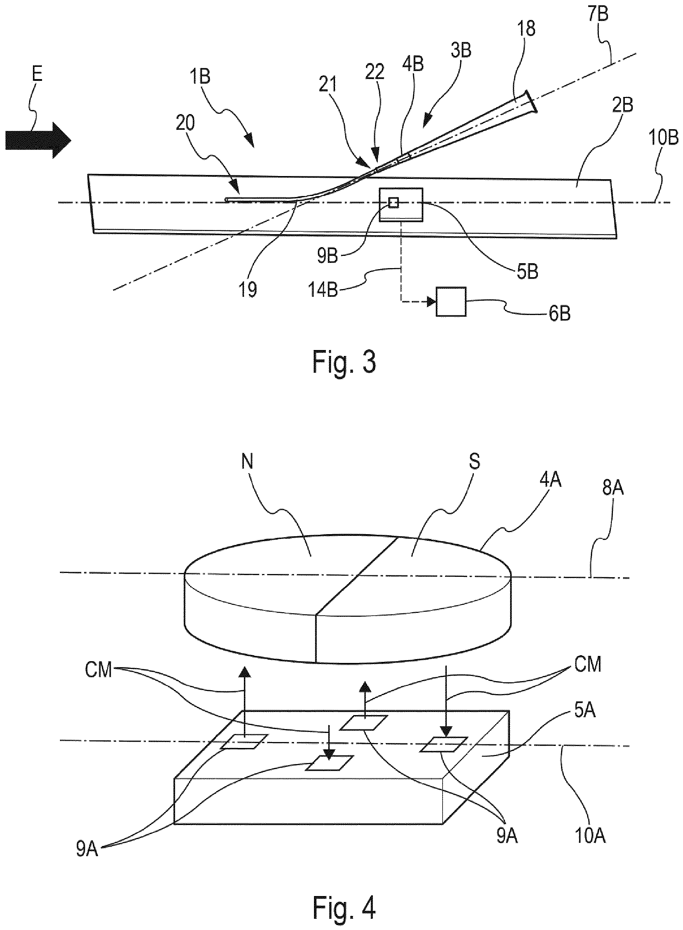

Le dispositif de mesure permettant d'illustrer l'invention est représenté schématiquement, selon un premier mode de réalisation 1A sur les figures 1 et 2, et selon un second mode de réalisation 1B sur la figure 3. Pour faciliter la compréhension, dans la description suivante, les éléments des premier et second modes de réalisation qui mettent en œuvre les mêmes fonctions sont identifiés par la même référence numérique (2, 3, 4, ...), à laquelle on a ajouté la lettre A pour les éléments du premier mode de réalisation et la lettre B pour les éléments du second mode de réalisation.

Le dispositif de mesure 1A, 1B est destiné à mesurer un paramètre d'un écoulement de fluide par rapport à une surface aérodynamique. Bien que non exclusivement, le dispositif de mesure 1A, 1B peut notamment être utilisé pour mesurer la direction de l'écoulement de fluide sur une surface externe d'une partie d'un aéronef ou d'un équipement de l'aéronef, en particulier d'un avion de transport, comme précisé ci-dessous.

On entend par « écoulement de fluide », le déplacement d'un fluide gazeux au-dessus d'une surface. Dans le cas préféré de l'application du dispositif de mesure 1A, 1B à un aéronef, on considère que le fluide est l'air et que la surface est une surface externe de l'aéronef sur laquelle on souhaite étudier les écoulements de fluide.

On entend par « surface aérodynamique » toute surface, notamment une surface de forme profilée, qui est apte à être soumise à des écoulements de fluide, généralement dans le but de favoriser la portance et de minimiser la traînée. Un moyen pour minimiser les efforts de traînée consiste à concevoir une surface aérodynamique formée de sorte que les écoulements de fluide restent attachés, c'est à dire que les lignes de courant de l'écoulement suivent les contours de ladite surface. On cherche également, généralement, à éviter un décollement qui, dans le domaine aéronautique, peut être responsable d'événements indésirables voire dangereux, tels qu'un décrochage.

Le dispositif de mesure 1A, 1B a pour objectif de mesurer l'orientation d'un écoulement de fluide, illustré par une flèche E sur les figures 1, 2 et 3, par rapport à une surface aérodynamique SA.

A cet effet, le dispositif de mesure 1A, 1B comporte, comme représenté sur les figures 1, 2 et 3 :
- un support 2A, 2B destiné à être agencé sur la surface aérodynamique SA ;
- un élément profilé 3A, 3B, à savoir allongé, qui est lié par l'une de ses extrémités au support 2A, 2B, et qui est configuré pour être orientable sous l'effet (ou l'action) de l'écoulement de fluide, et plus particulièrement pour être orienté dans une direction qui correspond à la direction de l'écoulement de fluide ;
- un aimant 4A, 4B solidaire de l'élément profilé 3A, 3B et configuré pour générer un champ magnétique CM. L'aimant 4A, 4B solidaire de l'élément profilé 3A, 3B est donc soumis, le cas échéant, au même déplacement que l'élément profilé 3A, 3B sous l'action de l'écoulement de fluide, et en cas de déplacement, le champ magnétique CM qu'il génère varie suivant le point donné de la surface ; et
- une unité de mesure 5A, 5B configurée pour mesurer la valeur du champ magnétique CM généré par l'aimant 4A, 4B. Cette valeur est donc fonction de la direction de l'écoulement de fluide.

De plus, l'unité de mesure 5A, 5B est configurée pour convertir cette valeur mesurée (du champ magnétique CM) en une valeur numérique, à savoir une valeur d'angle indiquant la direction de l'écoulement de fluide, et pour transmettre cette valeur d'angle.

Le dispositif de mesure 1A, 1B comporte également une unité de traitement 6A, 6B liée par l'intermédiaire d'une liaison 14A, 14B de préférence une liaison filaire, à l'unité de mesure 5A, 5B. L'unité de traitement 6A, 6B est configurée pour réaliser un traitement au moins des valeurs d'angle transmises par l'unité de mesure 5A, 5B via la liaison 14A, 14B.

Dans une variante de réalisation, l'unité de mesure 5A, 5B est configurée pour transmettre la valeur mesurée du champ magnétique CM, cette dernière étant convertie en une valeur d'angle indiquant la direction de l'écoulement de fluide par une unité de calcul externe au dispositif de mesure 1A, 1B, par exemple par l'unité de traitement 6A, 6B.

Dans une autre variante de réalisation, l'unité de mesure 5A, 5B est configurée pour stocker les valeurs mesurées du champ magnétique CM (et éventuellement les valeurs d'angle), en vue d'un traitement ultérieur, mis en œuvre par exemple par l'unité de traitement 6A, 6B.

En outre, l'unité de traitement 6A, 6B est également apte à déterminer, à partir des valeurs d'angle transmises par l'unité de mesure 5A, 5B, un critère de comportement aérodynamique, comme précisé ci-dessous.

Dans un mode de réalisation préféré, l'unité de mesure 5A, 5B est réalisée sous forme d'un capteur magnétique de type micro électromécanique dit MEMS (MEMS pour « Micro Electro Mecanical Sensor » en anglais).

Dans le premier mode de réalisation des figures 1 et 2, le support 2A est réalisé dans un matériau flexible de sorte qu'il puisse épouser la surface aérodynamique SA. Le dispositif de mesure 1A peut ainsi s'adapter à différentes formes de surface aérodynamique, notamment des formes courbes. De plus, l'épaisseur du support 2A est, de préférence, inférieure au millimètre afin de minimiser la surface frontale totale du dispositif de mesure 1A et ainsi ne pas perturber l'écoulement de fluide.

Dans le mode de réalisation représenté sur les figures 1 et 2, l'élément profilé 3A comprend une ailette 13, l'ailette 13 étant pourvue d'une extrémité formée pour réaliser une liaison pivot entre l'élément profilé 3A et le support 2A. Cette liaison pivot permet à l'ailette 13 de se déplacer librement en rotation dans le plan de la surface aérodynamique SA. De plus, cette liaison pivot est configurée pour limiter au maximum les frottements.

Dans ce premier mode de réalisation, l'ailette 13 de l'élément profilé 3A présente, de préférence, une forme profilée longiligne, présentant un axe longitudinal 7A représentatif de son orientation. L'élément profilé 3A est configurée pour que son déplacement sous l'effet de l'écoulement de fluide oriente l'axe longitudinal 7A dans la même direction que la direction E de l'écoulement de fluide. L'orientation de l'axe longitudinal 7A de l'élément profilé 3A soumis à l'écoulement de fluide correspond donc à l'orientation dudit écoulement de fluide.

Dans l'exemple des figures 1 et 2, l'ailette 13 réalisée par exemple en plastique ou en polymère est liée par un élément de base 15 à une pièce de support 16. La pièce de support 16 est solidaire du support 2A, et l'élément de base 15 est monté rotatif par rapport à la pièce de support 16. L'aimant 4A est intégrée dans cet élément de base 15 de l'élément profilé 3A.

Le dispositif de mesure 1A comprend également, dans cet exemple, un carénage 17 entourant la pièce de support 16 et l'unité de mesure 5A. Ce carénage 17 permet d'assurer une continuité géométrique entre la surface aérodynamique SA et les surfaces du dispositif de mesure 1A exposées à l'écoulement de fluide. Le carénage 17 présente, notamment, une forme aplatie légèrement bombée afin de limiter la perturbation de l'écoulement de fluide générée par le dispositif de mesure 1A. En particulier, le carénage 17 est configuré pour être agencé sur le support 2A et pour recouvrir les composants du dispositif de mesure 1A à l'exception de l'ailette 13.

Par ailleurs, l'aimant 4A est un micro aimant, c'est-à-dire un aimant de très petite taille (de l'ordre du millimètre), de forme cylindrique. Comme illustré sur la figure 4, l'aimant 4A possède un pôle nord N et un pôle sud S correspondant à deux demi-cylindres de l'aimant 4A. Le champ magnétique CM généré par un tel aimant 4A cylindrique est, d'une part fixe et constant par rapport à l'aimant 4A, et d'autre part possède une forme symétrique par rapport à un axe nord-sud 8A défini par les deux pôles de l'aimant 4A. Or, l'aimant 4A est solidaire de l'élément profilé 3A et est donc toujours orienté de la même façon par rapport à l'élément profilé 3A. Par conséquent, le champ magnétique CM est lui aussi toujours orienté de la même façon par rapport à l'élément profilé 3A.

Dans un mode de réalisation particulier, l'aimant 4A est agencé sur l'élément profilé 3A de telle sorte que l'axe nord-sud 8A (figure 4) de l'aimant 4A est aligné avec l'axe longitudinal 7A (figures 1 et 2) de l'élément profilé 3A. Le champ magnétique CM généré par l'aimant 4A est ainsi symétrique par rapport à l'axe longitudinal 7A de l'élément profilé 3A.

Dans le mode de réalisation particulier représenté sur la figure 4, l'unité de mesure 5A comporte quatre capteurs magnétiques 9A aptes à mesurer une valeur du champ magnétique CM généré par l'aimant 4A. De plus, l'unité de mesure 5A est agencée sur le support 2A, de préférence directement au-dessous de l'élément profilé 3A.

L'unité de mesure 5A comporte une unité de calcul intégrée (et non représentée) qui est configurée pour comparer entre elles les valeurs du champ magnétique CM, mesurées par les capteurs magnétiques 9A, et pour calculer, à partir du résultat de cette comparaison, de façon usuelle, une valeur d'angle. Dans un mode de réalisation particulier, l'unité de mesure 5A comporte un axe de référence 10A, et est configurée pour que la valeur d'angle calculée corresponde à la valeur, en degrés, de l'angle formé par l'axe nord-sud 8A de l'aimant 4A et ledit axe de référence 10A.

Dans ce premier mode de réalisation, l'élément profilé 3A est configuré pour être orientable dans un plan P (figure 2). De préférence, le plan P correspond à un plan parallèle au plan tangent à la surface aérodynamique SA passant par l'axe de référence 10A.

Dans ce premier mode de réalisation, l'unité de mesure 5A est configurée pour convertir la valeur du champ magnétique CM généré par l'aimant 4A en une valeur d'angle dans le plan P. Cette valeur d'angle correspond alors à l'angle plan (en deux dimensions) formé par l'axe de référence 10A de l'unité de mesure 5A et la direction E de l'écoulement de fluide dans le plan P. Cette valeur d'angle est transmise par l'unité de mesure 5A à l'unité de traitement 6A.

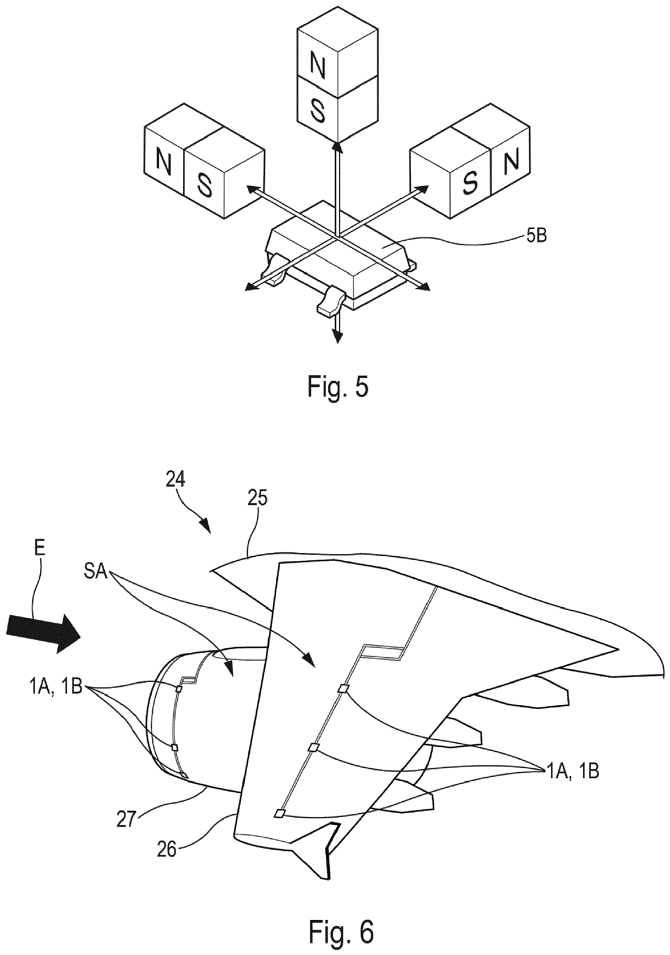

Par ailleurs, dans un mode de réalisation particulier, l'unité de traitement 6A est configurée pour déterminer, à partir des valeurs d'angle transmises par l'unité de mesure 5A, un critère de comportement aérodynamique. Dans l'application à un aéronef, telle que décrite ci-dessous en référence à la figure 6, on considère trois critères de comportement aérodynamique qui sont définis en fonction des valeurs d'angle transmises par l'unité de mesure 5A. Plus précisément :
- si l'élément profilé 3A, soumis à l'écoulement de fluide, prend une direction stable, variant très peu dans le temps (de l'ordre de plus ou moins un degré), on considère que l'écoulement de fluide est attaché ;
- si l'élément profilé 3A, soumis à l'écoulement de fluide, oscille autour d'une direction donnée avec un angle n'excédant pas 35° par rapport à cette direction donnée, on considère que l'écoulement de fluide est turbulent ; et
- si l'élément profilé 3A, soumis à l'écoulement de fluide, ne prend pas de direction stable au cours du temps ou oscille autour d'une direction donnée avec un angle excédant 35° par rapport à cette direction donnée, on considère que l'écoulement de fluide est décollé.

Le dispositif de mesure 1A, tel que décrit ci-dessus, comprenant un élément profilé 3A pourvu d'une ailette 13 et une unité de mesure 4A réalisant des mesures à deux axes (dans un plan), est particulièrement adapté à des mesures d'écoulements de fluide présentant des vitesses élevées. Il est également avantageux pour des applications nécessitant une grande précision, puisqu'il permet de mesurer l'orientation de l'écoulement de fluide avec une précision (pour les valeurs d'angle) de l'ordre du degré.

Par ailleurs, dans le second mode de réalisation représenté sur la figure 3, l'élément profilé 3B est configuré pour être orientable dans l'espace.

Dans ce second mode de réalisation, l'élément profilé 3B est pourvu d'un cône (de révolution) 18 réalisé par exemple en plastique. Le cône 18 de l'élément profilé 3B présente un axe longitudinal 7B. L'élément profilé 3B est configuré pour que son déplacement sous l'effet de l'écoulement de fluide oriente l'axe longitudinal 7B dans la même direction que la direction E de l'écoulement de fluide. L'orientation de l'axe longitudinal 7B de l'élément profilé 3B soumis à l'écoulement de fluide correspond donc à l'orientation dudit écoulement de fluide.

L'élément profilé 3B est lié au support 2B via un fil de liaison 19, par exemple un fil en nylon. Une première extrémité 20 du fil de liaison 19 est fixée au support 2B, par exemple par l'intermédiaire de colle et/ou d'un autre adhésif. La seconde extrémité 21 du fil de liaison 19 est attachée au sommet 22 du cône 18.

L'aimant 4B est agencé, de préférence, à l'intérieur du cône 18, à proximité de son sommet 22.

Dans ce second mode de réalisation, l'unité de mesure 5B illustrée partiellement et schématiquement sur la figure 5 est configurée pour convertir, de façon usuelle, la valeur du champ magnétique CM généré par l'aimant 4B en une valeur d'angle dans l'espace. La valeur d'angle correspond alors à l'angle formé par un axe de référence 10B de l'unité de mesure 5B et la direction E de l'écoulement de fluide.

Le dispositif de mesure 1B, tel que décrit ci-dessus, comprenant un élément profilé 3B pourvu d'un cône 18 et une unité de mesure 4B réalisant des mesures à trois axes (dans l'espace), est particulièrement adapté à des mesures d'écoulements de fluide présentant des vitesses modérées. Il est notamment adapté à la détection de phénomènes de décollement, puisqu'il permet de mesurer des valeurs d'angle d'écoulement de fluide dans des directions hors du plan tangent à la surface aérodynamique SA.

On décrit, ci-après, la mise en place d'un dispositif de mesure 1A, 1B sur une surface aérodynamique SA (au niveau de laquelle on souhaite analyser le comportement d'un écoulement de fluide, par exemple une surface d'une partie d'un aéronef comme précisé ci-dessous en référence à la figure 6), ainsi que son fonctionnement.

Lors de la mise en place du dispositif de mesure 1A, 1B, ce dernier est agencé sur la surface aérodynamique SA en fixant le support 2A, 2B sur ladite surface aérodynamique SA avec de la colle ou d'autres moyens adhésifs. De plus, le dispositif de mesure 1A, 1B est agencé de sorte que l'axe de référence 10A, 10B de l'unité de mesure 5A, 5B soit orienté selon une direction dite de référence de la surface aérodynamique SA.

La direction de référence est une direction qui peut être choisie arbitrairement et qui définit la direction selon laquelle on souhaite que le dispositif de mesure 1A, 1B mesure une valeur d'angle de 0°. Par exemple, dans le cas d'un écoulement de fluide, principalement unidirectionnel, la direction de référence peut correspondre à la direction générale dudit écoulement de fluide.

On précise, ci-après, le fonctionnement du dispositif de mesure 1A, 1B agencé sur la surface aérodynamique SA soumise à un écoulement de fluide.

Les efforts induits par l'écoulement de fluide sur les faces de l'élément profilé 3A, 3B le font se déplacer par rapport au support 2A, 2B de telle sorte que l'axe longitudinal 7A, 7B dudit élément profilé 3A, 3B prend la même orientation que celle de l'écoulement de fluide.

L'aimant 4A, 4B solidaire de l'élément profilé 3A, 3B prend la même orientation que l'écoulement de fluide, ce qui modifie l'orientation du champ magnétique CM généré par l'aimant 4A, 4B à un point donné de la surface aérodynamique SA. Ceci a pour effet de modifier la valeur de champ magnétique mesurée par les capteurs magnétiques 9A, 9B de l'unité de mesure 5A, 5B. Le changement de valeur de champ magnétique, généré par le changement d'orientation de l'aimant 4A, 4B, est traité par l'unité de mesure 5A, 5B afin de déterminer une valeur d'angle.

La valeur d'angle déterminée par l'unité de mesure 5A, 5B est la valeur de l'angle formé par l'axe de référence 10A, 10B de l'unité de mesure 5A, 5B et l'orientation du champ magnétique CM, c'est-à-dire l'orientation de l'aimant 4A, 4B. Or, l'orientation de l'aimant 4A, 4B correspond à l'orientation de l'élément profilé 3A, 3B qui correspond à l'orientation de l'écoulement de fluide. De plus, l'axe de référence 10A, 10B de l'unité de mesure 5A, 5B étant par exemple agencé selon une direction de référence de la surface aérodynamique, comme indiqué ci-dessus, la valeur d'angle déterminée par l'unité de calcul 12A, 12B correspond à l'angle entre l'orientation de l'écoulement de fluide et cette direction de référence.

Dans une application particulière, le dispositif de mesure 1A, 1B possède une fréquence d'acquisition permettant de mesurer et fournir les valeurs d'angle à une vitesse élevée, par exemple à une vitesse de quinze mesures par seconde, ce qui permet de disposer d'une représentation dynamique et exploitable de l'évolution de l'écoulement de fluide au cours du temps.

Par ailleurs, dans un mode de réalisation particulier, l'élément de mesure 4A, 4B est configuré pour fournir également la valeur mesurée du champ magnétique (généré par l'aimant 4A, 4B) à l'unité de traitement 6A, 6B, en plus de la valeur d'angle. Dans ce cas, l'unité de traitement 6A, 6B peut, par exemple, comparer cette valeur mesurée de champ magnétique à une valeur limite prédéterminée, et générer une alerte si ladite valeur mesurée de champ magnétique dépasse cette valeur limite.

La prise en compte de la valeur mesurée du champ magnétique par l'unité de traitement 6A, 6B permet de disposer d'une grandeur physique autre que la seule valeur d'angle. Il n'est pas forcément aisé de détecter une défaillance du dispositif de mesure 1A, 1B ou un parasitage du champ magnétique mesuré en ne prenant en compte que la valeur d'angle transmise par l'unité de mesure 5A, 5B. Par exemple, dans le cas de l'application du dispositif de mesure 1A, 1B à l'analyse des surfaces aérodynamiques d'un aéronef, il est possible que le dispositif de mesure 4A, 4B soit positionné à proximité d'un équipement électrique dudit aéronef générant un champ magnétique parasite. Dans ce cas, le champ magnétique parasite peut polluer la mesure du champ magnétique CM par l'unité de mesure 5A, 5B et conduire à la transmission d'une valeur d'angle erronée. L'aimant 4A, 4B et la valeur du champ magnétique qu'il génère étant connus, l'unité de traitement 6A, 6B est donc en mesure d'identifier une valeur de champ magnétique mesurée incohérente, et ainsi d'en déduire que la valeur d'angle correspondante est erronée et qu'elle ne doit pas être prise en compte.

Par ailleurs, dans un mode de réalisation particulier, l'unité de mesure 5A, 5B comporte au moins un capteur auxiliaire apte à mesurer un paramètre auxiliaire autre que le champ magnétique, comme par exemple un capteur de température 23 représenté sur la figure 1.

Le capteur de température 23 est apte à mesurer la température d'au moins un composant du dispositif de mesure 1A, 1B ou de l'environnement du dispositif de mesure 1A, 1B, et à transmettre la valeur de température mesurée à l'unité de traitement 6A, 6B, par exemple via la liaison 14A, 14B. L'unité de traitement 6A, 6B peut utiliser cette valeur de température pour diverses applications. En particulier, elle peut la comparer à une valeur limite prédéterminée, par exemple 85°C, et générer un message d'alerte si la valeur de température mesurée dépasse cette valeur limite.

Ce mode de réalisation permet de détecter une température anormale au niveau du dispositif de mesure 1A, 1B qui peut signifier un dysfonctionnement dudit dispositif de mesure 1A, 1B ou d'un composant de ce dernier. Une valeur trop élevée de la température d'un composant peut servir d'alerte, impliquant par exemple de ne pas prendre en compte les valeurs d'angle fournies par le dispositif de mesure 1A, 1B.

L'unité de mesure 5A, 5B peut également comporter, comme capteur auxiliaire, un capteur de pression (non représenté) apte à mesurer la pression statique générée par l'écoulement de fluide sur la surface aérodynamique.

Le dispositif de mesure 1A, 1B, tel que décrit ci-dessus, est donc particulièrement avantageux. Il permet notamment de mesurer et de fournir, en temps réel, une valeur d'angle (numérique), définie par rapport à une direction de référence connue, qui indique de façon très précise la direction d'un écoulement de fluide sur une surface aérodynamique.

Le dispositif de mesure 1A, 1B permet donc de fournir des mesures chiffrées, très précises, permettant de caractériser les écoulements de fluide et notamment les phénomènes de décollement. Ces valeurs numériques peuvent être utilisées pour réaliser des traitements postérieurs, tels que par exemple des comparaisons avec des simulations numériques. Les valeurs d'angle fournies permettent également de déterminer un critère (attaché, instable, séparé) caractéristique du comportement aérodynamique de l'écoulement analysé.

En outre, la précision élevée des valeurs d'angle obtenues peut par exemple permettre de répondre, le cas échéant, au haut niveau d'exigence requis pour certaines certifications, par exemple d'un aéronef.

Une application préférée du dispositif de mesure 1A, 1B, telle qu'illustrée sur la figure 6, est l'analyse des écoulements de fluide sur les surfaces externes d'un aéronef 24, en particulier d'un avion de transport. Dans l'exemple représenté sur la figure 6, on a uniquement représenté une partie de l'aéronef 24, comprenant une aile 26 attachée à un fuselage 25 et un réacteur 27 montée sous l'aile 26. Dans cet exemple, une pluralité de dispositifs de mesure 1A, 1B sont agencés sur les surfaces aérodynamiques SA de ces éléments, et notamment sur la face supérieure de l'aile 26 et autour de la face externe du réacteur 27 à proximité de l'entrée d'air.

Avantageusement, le dispositif de mesure 1A, 1B peut être mis en œuvre sur des surfaces aérodynamiques difficilement observables visuellement, telles que par exemple les surfaces intérieures d'un réacteur, l'intrados d'une aile ou des surfaces d'empennages horizontaux ou de la dérive.

Dans une application particulière, le dispositif de mesure 1A, 1B est mis en œuvre en tant qu'outil de test dans des procédés de conception ou de validation de structures aérodynamiques. Le dispositif de mesure 1A, 1B est agencé sur des surfaces aérodynamiques d'un aéronef, d'une maquette ou d'un équipement pour lesquels on souhaite étudier le comportement d'un écoulement de fluide dans le cadre de tests.

Dans un premier type de test, la structure à tester est un aéronef destinée à effectuer un vol d'essai. Le dispositif de mesure 1A, 1B est alors agencé sur la ou les surfaces aérodynamiques de la structure pour lesquelles on veut étudier l'écoulement de fluide. Une pluralité de dispositif 1A, 1B peut être agencée sur lesdites surfaces afin de réaliser un maillage permettant d'analyser le comportement de l'écoulement de fluide sur toute une zone. L'aéronef réalise ensuite un vol d'essai lors duquel ces surfaces sont soumises à l'écoulement de l'air. Le ou les dispositifs de mesure 1A, 1B fournissent des valeurs d'angle et de comportement aérodynamique permettant de caractériser l'écoulement de l'air par rapport aux surfaces analysées, et ceci en temps réel.

En outre, dans un second type de test, la structure à tester est soumise à un test en soufflerie. Un ou plusieurs dispositifs 1A, 1B sont agencés sur les surfaces aérodynamiques de la structure à analyser. La structure est ensuite agencée dans la soufflerie afin d'être soumise à un écoulement de fluide maîtrisé et défini par un protocole de test. Le ou les dispositifs de mesure 1A, 1B fournissent des valeurs d'angle et de comportement aérodynamique permettant de caractériser l'écoulement de fluide par rapport aux surfaces analysées.

Toutefois, l'utilisation du dispositif de mesure 1A, 1B, tel que décrit ci-dessus, n'est pas limité au domaine de l'aéronautique. En effet, il peut être utilisé comme outil d'analyse du comportement d'un écoulement de fluide par rapport à une surface aérodynamique, dans toute application impliquant une structure soumise à un écoulement de fluide.

Le dispositif de mesure 1A, 1B peut notamment être utilisé pour analyser les écoulements d'air sur les surfaces d'engins mobiles tels que par exemple des engins terrestres, en particulier dans les domaines automobile et ferroviaire, ou des engins volants, en particulier dans le domaine balistique.

## Revendications

1. Dispositif de mesure de l'orientation d'un écoulement de fluide par rapport à une surface aérodynamique, en particulier d'un aéronef, ledit dispositif de mesure (1A, 1B) comportant au moins :
- un support (2A, 2B) destiné à être agencé sur la surface aérodynamique (SA) ;
- un élément profilé (3A, 3B) lié par l'une de ses extrémités au support (2A, 2B), et configuré pour être orienté, sous l'effet de l'écoulement de fluide, dans une direction correspondant à celle dudit écoulement de fluide ;
**caractérisé en ce qu'**il comporte de plus :
- un aimant (4A, 4B) solidaire de l'élément profilé (3A, 3B) et configuré pour générer un champ magnétique (CM) ; et
- au moins une unité de mesure (5A, 5B) configurée pour mesurer une valeur du champ magnétique (CM) généré par l'aimant (4A, 4B), qui est fonction de la direction de l'écoulement de fluide.

2. Dispositif de mesure selon la revendication 1,
**caractérisé en ce que** l'unité de mesure (5A, 5B) est configurée pour convertir la valeur mesurée du champ magnétique (CM) généré par l'aimant (4A, 4B) en une valeur d'angle indiquant la direction de l'écoulement de fluide.

3. Dispositif de mesure selon la revendication 2,
**caractérisé en ce qu'**il comporte, de plus, une unité de traitement (6A, 6B) configurée pour réaliser un traitement au moins de valeurs d'angle transmises par l'unité de mesure (5A, 5B).

4. Dispositif de mesure selon la revendication 3,
**caractérisé en ce que** l'unité de traitement (6A, 6B) est configurée pour déterminer, à partir de la valeur d'angle, un critère de comportement aérodynamique.

5. Dispositif de mesure selon l'une des revendications 1 à 4,
**caractérisé en ce que** l'élément profilé (3A) est configuré pour être orientable dans un plan (P) et **en ce que** l'unité de mesure (5A) est configurée pour convertir la valeur mesurée du champ magnétique (CM) généré par l'aimant (4A) en une valeur d'angle dans ledit plan (P).

6. Dispositif de mesure selon la revendication 5,
**caractérisé en ce que** l'élément profilé (3A) comprend une ailette (13) pourvue d'un élément saillant configuré pour former une liaison pivot entre l'élément profilé (3A) et le support (2A).

7. Dispositif de mesure selon l'une des revendications 1 à 4,
**caractérisé en ce que** l'élément profilé (2B) est configuré pour être orientable dans l'espace et **en ce que** l'unité de mesure (5B) est configurée pour convertir la valeur mesurée du champ magnétique (CM) généré par l'aimant (4B) en une valeur d'angle dans l'espace.

8. Dispositif de mesure selon la revendication 7,
**caractérisé en ce que** l'élément profilé (3B) comprend un cône (18) de révolution pourvu d'un sommet (22) et **en ce que** ledit cône (18) est fixé au support (2B) par l'intermédiaire d'un fil de liaison (19), une première extrémité (20) du fil de liaison (19) étant attachée au support (2B) et une seconde extrémité (21) du fil de liaison (19) étant attachée au sommet (22) du cône (18).

9. Dispositif de mesure selon l'une des revendications 3 et 4,
**caractérisé en ce que** l'unité de mesure (5A, 5B) est configurée pour transmettre également la valeur mesurée du champ magnétique (CM) généré par l'aimant (4A, 4B) à l'unité de traitement (6A, 6B), et **en ce que** l'unité de traitement (6A, 6B) est configurée pour comparer cette valeur mesurée du champ magnétique (CM) à une valeur limite prédéterminée, et pour générer une alerte si ladite valeur mesurée du champ magnétique (CM) dépasse cette valeur limite.

10. Dispositif de mesure selon l'une quelconque des revendications 1 à 9, **caractérisé en ce que** l'unité de mesure (5A, 5B) comporte au moins un capteur auxiliaire (23) apte à mesurer au moins un paramètre auxiliaire autre que le champ magnétique.
